# EUROPEAN PATENT APPLICATION

(11) **EP 0 747 440 A2**
(43) Date of publication of application: **11.12.1996**
(21) Application number: 96304235.3
(22) Date of filing: 06.06.1996
(51) Int. Cl.: C08L 71/12, C08L 77/00

(54) **Compositions containing polyphenylene ether and polyamide resins**

(30) Priority: 07.06.1995 US 476827
(71) Applicant: GENERAL ELECTRIC COMPANY, Schenectady, NY 12345 (US)
(72) Inventor: Sheehan, Kevin, Avon Lake, Ohio 44012 (US); Wroczynski, Ronald James, Schenectady, New York 12303 (US); Ullman, Timothy Joseph, Averill Park, New York 12018 (US); Yates III, John Bennie, Glenmont, New York 12077 (US)
(74) Representative: Szary, Anne Catherine

(57) **Abstract**

An improved thermoplastic composition is described herein, comprising polyphenylene ether and polyamide resins, a compatibilizer, and an impact strength-modifying agent which is a combination of (i) at least one substantially saturated block copolymer comprising vinyl aromatic hydrocarbon and polymerized conjugated diene blocks; and (ii) at least one unmodified interpolymer which itself comprises a mixture of mono-olefins.

## Description

This invention relates to polyphenylene ether-polyamide compositions which exhibit enhanced properties, such as impact strength.

Polyphenylene ether resins are commercially attractive materials because of their unique combination of chemical, physical, and electrical properties. Furthermore, the combination of these resins (sometimes alternatively referred to as "PPE" or "polyphenylene oxide" resins) with polyamides results in additional overall properties, such as high strength and chemical resistance. Examples of such a combination can be found in U.S. Patents 4,659,760 (van der Meer); 4,732,938 (Grant et al); and 4,315,086 (Ueno et al). The properties of blends of PPE and polyamide are often further enhanced by the addition of flow modifiers, impact modifiers, fillers, and certain compounds which appear to compatibilize the base resins.

In regard to these additional enhancements of PPE/polyamide blends, impact strength is perhaps the most difficult property to improve, without detracting from other characteristics of the overall polymer product. For example, one additive sometimes used to enhance impact strength is a styrene-butadiene-styrene triblock copolymer. While such a material often functions well under normal processing conditions, the unsaturation contained therein sometimes leads to decomposition at the higher extrusion temperatures often required for PPE/polyamide end uses, thereby reducing the overall impact strength of the composition.

One way to compensate for the degradation of the unsaturated triblock copolymer involves simply adding more of the material. However, such a solution may not be desirable from a commercial point of view. Furthermore, the addition of more styrene lowers the heat distortion temperature (HDT) of the overall polymer system, which is often an undesirable result. Similarly, the addition of more of the rubbery portion of the copolymer - whether saturated or unsaturated - decreases HDT, while also decreasing the flexural modulus and flexural strength of the product.

It is therefore apparent that a need still exists for a cost-effective PPE-polyamide composition which exhibits good impact strength, both at room temperature and at much lower temperatures; which does not rely solely on styrene-based impact modifiers, and which does not substantially detract from other important properties, such as tensile strength and heat distortion temperature.

### SUMMARY OF THE INVENTION

The needs discussed above have been generally satisfied by the discovery of an improved thermoplastic composition which comprises:
a) about 20% by weight to about 80% by weight of a polyphenylene ether resin;
b) about 80% by weight to about 20% by weight of a polyamide;
c) about 0.05% by weight to about 4% by weight of a compatibilizing compound for components (a) and (b); and
d) about 5% by weight to about 30% by weight of an impact strength-modifying agent which is a combination of
   (i) at least one substantially saturated block copolymer of the A-B type, where A is a polymerized vinyl aromatic hydrocarbon block, and B is derived from at least one polymerized conjugated diene; and
   (ii) at least one unmodified interpolymer which itself comprises a mixture of mono-olefins.

Each of the weight percentages mentioned above is based on the weight of the entire composition. The description which follows provides further details regarding this invention.

### DETAILED DESCRIPTION OF THE INVENTION

The PPE resins which are useful for the present invention are generally well-known in the art. Many of them are described in U.S. Patents 3,306,874; 3,306,875; and 3,432,469 of Allan Hay; U.S. Patents 3,257,357 and 3,257,358 of Gelu Stamatoff; U.S. Patent 4,806,602 of Dwain M. White et al.; and U.S. Patent 4,806,297 of Sterling B. Brown et al., all incorporated herein by reference. Both homopolymer and copolymer polyphenylene ethers are within the scope of this invention.

The preferred PPE resins are homo- and copolymers which comprise a plurality of structural units of the formula 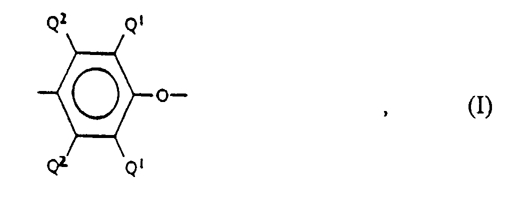 wherein each Q¹ is independently halogen, primary or secondary lower alkyl, phenyl, haloalkyl, aminoalkyl, hydrocarbonoxy, or halohydrocarbonoxy, wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹.

Examples of suitable primary lower alkyl groups are methyl, ethyl n-propyl, n-butyl, isobutyl n-amyl, isoamyl, 2-methylbutyl, n-hexyl, 2,3-dimethylbutyl, 2-, 3- or 4-methylpentyl, and the corresponding heptyl groups. Examples of secondary lower alkyl groups are isopropyl sec-butyl and 3-pentyl. Preferably, any alkyl radicals are straight chain, rather than branched. Most often, each Q¹ is alkyl or phenyl especially C₁₋₄ alkyl, and each Q² is hydrogen.

Especially preferred polyphenylene ethers are comprised of units derived from 2,6-dimethyl phenol, e.g., poly(2,6-dimethyl-1,4-phenylene ether). Also preferred in some instances are PPE copolymers comprised of units derived from 2,6-dimethyl phenol; 2,3,6-trimethyl phenol; and mixtures thereof. This invention also includes within its scope PPE resins which contain certain moieties which modify properties such as molecular weight, melt viscosity, or impact strength.

The PPE resins of this invention generally have a weight average molecular weight of about 20,000 to 80,000, as determined by gel permeation chromatography. Furthermore, they can be prepared by methods known in the art: for example, oxidative coupling of an appropriate monohydroxyaromatic compound in the presence of a catalyst based on copper, manganese, or cobalt.

As mentioned above, a preferred level of PPE resin for the present invention is about 20% by weight to about 80% by weight, based on the weight of the entire composition. In more preferred embodiments, the amount of PPE is about 25% by weight to about 65% by weight, and in the most preferred embodiments, the level is about 35% by weight to about 55% by weight.

Component (b) of this invention is a polyamide resin, or mixtures of various polyamide resins. The choice of a particular polyamide is not critical to the present invention; most are well-known in the art. The polyamides (often referred to as "nylons") may be prepared by any of the various recognized methods, including the polymerization of a monoamino-monocarboxylic acid or a lactam thereof having at least 2 carbon atoms between the amino and carboxylic acid group, of substantially equimolar proportions of a diamine which contains at least 2 carbon atoms between the amino groups and a dicarboxylic acid, or of a monoaminocarboxylic acid or a lactam thereof as defined above together with substantially equimolar proportions of a diamine and a dicarboxylic acid. The dicarboxylic acid may be used in the form of a functional derivative thereof for example, an ester or acid chloride.

A detailed description of polyamides and polyamide precursor materials is provided in U.S. Patent 4,755,566, issued to J. Yates, III, the entire contents of which are incorporated herein by reference. Other descriptions of suitable polyamides are provided in U.S. Patents 4,732,938 (Grant et al), 4,659,760 (van der Meer), and 4,315,086 (Ueno et al), each also incorporated herein by reference.

Specific examples of polyamides are polyamide-6; 66; 11; 12; 4,6; 6,3; 6,4; 6,10 and 6,12; as well as polyamides prepared from terephthalic acid and/or isophthalic acid and trimethylhexamethylenediamine; from adipic acid and m-xylylenediamines; from adipic acid, azelaic acid and 2,2-bis-(p-aminocyclohexyl)propane; from terephthalic acid and 4,4'-diaminodicyclohexylmethane; as well as polyphthalamides, such as those prepared from adipic acid, hexamethylenediamine, and iso- or terephthalic acids (e.g., Amodel®- and Arlen®-type resins). Mixtures and/or copolymers of two or more of the foregoing polyamides or prepolymers thereof respectively, are also within the scope of the present invention.

The polyamide used may also be one or more of those referred to as "toughened nylons", which are often prepared by blending one or more polyamides with one or more polymeric or copolymeric elastomeric toughening agents. Examples of these types of materials are given in U.S. Patents 4,174,358; 4,474,927; 4,346,194; 4,251,644; 3,884882; 4,147,740; all incorporated herein by reference, as well as in a publication by Gallucci et al, "Preparation and Reactions of Epoxy-Modified Polyethylene", J. APPL. POLY. SCI., V. 27, PP. 425-437 (1982).

The preferred polyamides for this invention are polyamide 6; 66; 4,6; 6,10; 11; and 12; with the most preferred being polyamide 6 and polyamide 66.

The weight ratio of PPE to polyamide may vary from about 20:80 to about 80:20, with a ratio in the range of about 35:65 to about 65:35 being preferred.

Component (c) of this invention is a compatibilizing compound for PPE and the polyamide. The concept of compatibilization between these resins is known to those in the polymer sciences. Improved compatibility is manifested by better processability, impact strength and/or elongation, or appearance, as compared to compositions without this component.

These compatibilizers are generally known in the art, and are usually either premixed with one of the base polymers or added separately to the composition at some point prior to or during blending. Compatibilizing compounds suitable for use herein generally fall into the following categories:
(a) compounds which contain both (i) an ethylenic carbon-carbon double bond or a carbon-carbon triple bond and (ii) a carboxylic acid, acid anhydride, acid amide, imide, carboxylic ester, amine, or hydroxyl group;
(b) liquid diene polymers;
(c) epoxy compounds;
(d) polycarboxylic acids or derivatives thereof;
(e) an oxidized polyolefin wax;
(f) a compound containing an acyl functional group;
(g) a chloroepoxytriazine compound; and
(h) a trialkylamine salt of maleic acid or fumaric acid.

Examples of subclass (a) compatibilizers are provided in the Ueno et al patent mentioned above, and include, for example, maleic anhydride, maleic acid, fumaric acid, maleimide, maleic hydrazide, as well as reaction products of a diamine with these materials.

Examples of subclass (b) compatibilizers are also provided in the Ueno et al patent, and include, for example, homopolymers of a conjugated diene and copolymers of the conjugated diene and at least one member selected from the group consisting of other conjugated dienes, olefins, aromatic vinyl compounds, and acetylenic compounds. Specific examples include homopolymers of butadiene or of isoprene.

The epoxy compounds of subclass (c) include, for example, epoxy resins produced by condensing polyhydric phenols and epichlorohydrin in different proportions, as well as glycidyletherified products of monohydric phenols or monohydric alcohols. Ueno et al provides further examples of these types of materials.

In regard to subclass (d), the polycarboxylic acid or derivative thereof which is suitable for this invention is usually one represented by the formula

(R^{I}O)ₘR(COOR^{II})ₙ(CONR^{III}R^{IV})ₛ

or derivatives thereof, wherein R is a linear or branched chain, saturated aliphatic hydrocarbon of from 2 to 20 carbon atoms; R^{I} is selected from the group consisting of hydrogen or an alkyl, aryl, acyl or carbonyl dioxy group of from 1 to 10 carbon atoms; each R^{II} is independently selected from the group consisting of hydrogen or an alkyl or aryl group of from 1 to 20 carbon atoms; each R^{III} and R^{IV} is independently selected from the group consisting of hydrogen or an alkyl or aryl group of from 1 to 10 carbon atoms; m is equal to 1 and (n + s) is greater than or equal to 2; and n and s are each greater than or equal to 0; and wherein (OR^{I}) is alpha or beta to a carbonyl group, and at least 2 carbonyl groups are separated by 2 to 6 carbon atoms.

Acid esters, e.g., those derived from polycarboxylic acids, are also part of this class of compatibilizers. Examples are acetyl citrate and mono- and distearyl citrates. Acid amides may also be used, such as N,N'-diethyl citric acidamide.

Examples of suitable derivatives of the polycarboxylic acids are the salts thereof, including the salts with amines and, preferably, the alkali and alkaline metal salts. Illustrative salts include calcium malate, calcium citrate, potassium malate, and potassium citrate.

Preferred compatibilizers of subclass (d) are malic acid, citric acid, and agaricic acid, and salts and hydrates thereof, as described in U.S. Patent 4,873,286, the contents of which are incorporated herein by reference.

Examples of subclass (e) are found in U.S. Patent 4,659,760, issued to R van der Meer, and incorporated herein by reference. One example is an oxidized polyethylene wax. Organic phosphites are sometimes used in conjunction with the wax.

Examples of subclass (f) are compounds described in U.S. Patents 4,642,358 and 4,600,741, issued to D. Aycock et al, each of which is incorporated herein by reference. Nonlimiting examples include chloroformylsuccinic anhydride, chloroethanoylsuccinic anhydride, trimellitic anhydride acid chloride, 1-acetoxy acetyl-3,4-dibenzoicacid anhydride, and terephthalic acid acid chloride. Also included within this subclass are PPE compounds which contain an acyl functional group, as described in the Aycock et al patents mentioned above.

Examples of the chloroepoxytriazine compounds of subclass (g) are compounds described in U.S. Patent 4,895,945, incorporated herein by reference. Furthermore, U.S. Patents 5,096,979; and 5,089,566, and 5,041,504 are generally relevant to these types of materials, and are therefore also incorporated herein by reference. Illustrative compounds are 2-chloro-4,6-diglycidoxy-1,3,5-triazine, also known as diglycidyl chlorocyanurate ("DGCC"); 2-chloro-4-(n-butoxy)-6-glycidoxy-1,3,5,-triazine, also known as n-butyl glycidyl chlorocyanurate ("BGCC"); and 2-chloro-4-(2,4,6-trimethylphenoxy)-6-glycidoxy-1,3,5-triazine, also known as mesityl glycidyl chlorocyanurate ("MGCC").

Various examples of the trialkylamine salts of subclass (h) are found in U.S. Patent 4,755,566, incorporated herein by reference.

Methods of preparing and using these compatibilizing compounds are generally known in the art. Many of the references mentioned above provide suitable descriptions.

The amount of component (c) required is that which is sufficient to improve the compatibility between the various components in the composition. This amount is usually up to about 4% by weight, and preferably from about 0.05% to about 4% by weight, based on the weight of the entire composition. In the most preferred embodiments, the amount of compatibilizer is in the range of about 0.1% to about 2% by weight.

Component (d) of this invention is a combination of (i) at least one substantially saturated block copolymer of the A-B type, where A is a polymerized vinyl aromatic hydrocarbon block, and B is derived from at least one polymerized conjugated diene; and (ii) at least one unmodified interpolymer which itself comprises a mixture of mono-olefins.

Component (d) of this invention is a combination of (i) at least block copolymer of the A-B type, where A is a polymerized vinyl aromatic monomer-derived block, and B is derived from at least one preferably substantially hydrogenated polymerized olefin; and (ii) at least one unmodified interpolymer which itself comprises a mixture of olefins.

The A-B block copolymer can comprise tapered and radial block copolymers and vinyl aromatic-conjugated diene core-shell graft copolymers An especially preferred subclass of vinyl aromatic monomer-derived resins are the block copolymers comprising monoalkenyl arene (usually styrene) blocks and conjugated diene (e.g., butadiene or isoprene) or olefin (e.g., ethylene-propylene, ethylene-butylene) blocks. The conjugated diene blocks are preferably partially or entirely hydrogenated, whereupon the properties are similar to the olefin block copolymers.

Suitable AB type block copolymers are disclosed in, for example, U.S. Patent Nos. 3,078,254, 3,402,159, 3,297,793, 3,265,765, and 3,594,452 and U.K. Patent 1,264,741, all incorporated herein by reference. Examples of typical species of AB block copolymers include polystyrene-polybutadiene (SBR), polystyrene-poly(ethylene-propylene), polystyrene-polyisoprene and poly(α-methylstyrenehpolybutadiene, as well as the selectively hydrogenated versions thereof. Such AB block copolymers are available commercially from a number of sources, including Phillips Petroleum under the trademark SOLPRENE, Shell Chemical Co., Under the trademark KRATON, and Kuraray under the trademark SEPTON.

The weight ratio of A to B for component (d)(i) is usually in the range of about 15:85 to about 60:40; preferably, in the range of about 20:80 to about 50;50; and most preferably, in the range of about 25:75 to about 40:60.

The interpolymers which constitute component (d)(ii) are rubbery in nature, and are generally known in the art They are also commercially available. The olefins which form these interpolymers are usually selected from the group consisting of ethylene and C₃₋₁₆ alpha-olefins. Examples of the alpha-olefins are propylene, 1-butene, 4-methyl-1-pentene, 1-hexene, 1-octene, and the like. Mixtures of any of the foregoing are also contemplated.

In preferred embodiments, component (d)(ii) comprises ethylene and at least one alpha-olefin. Such materials are described in U.S. Patents 5,115,042; 4,745,157; and 4,315,084; each incorporated herein by reference. The preferred weight ratio of ethylene to alpha-olefin content usually ranges from about 10:90 to about 90:10, and is most preferably in the range of about 75:25 to about 51:49. In especially preferred embodiments, (d)(ii) comprises ethylene and propylene units.

Furthermore, component (d)(ii) can optionally include minor amounts of various polyenes. Illustrative polyenes are non-conjugated cyclic dienes or open-chain dienes having about 5-20 carbon atoms. Specific examples are 5-ethylidene-2-norbornene; 1,4-hexadiene; or dicyclopentadiene. A "minor amount" as used for the polyenes is herein defined as an amount that is no greater than about 30 mole percent of the total moles of (d)(ii), and more preferably, no greater than about 15 mole percent.

As mentioned above, the interpolymer of component d(ii) should be unmodified. Modified materials of this type sometimes react with the polyamide resins and raise the viscosity of the overall composition to undesirable levels.

Polymers for (d)(ii) which contain ethylene; propylene as the alpha-olefin; and a polyene are often referred to as ethylene-propylenediene monomer rubbers, or "EPDM". Many of these materials, as well as techniques for their production, are described in U.S. Patents 3,407,158; 3,379,701; 3,093,621; 3,000,866; and 2,933,480, all incorporated herein by reference.

In preferred embodiments, the ratio of saturated block copolymer to rubbery interpolymer for component (d) is in the range of about 20:80 to about 80:20, and in especially preferred embodiments, is in the range of about 30:70 to about 70:30. Those of ordinary skill in the art can select the most appropriate ratio for a particular end use for this composition, based on various considerations, such as flexural modulus, flexural strength, impact strength at room temperature and lower temperatures; heat distortion temperature, and tensile strength.

The level of component (d) depends on some of the factors mentioned above, such as the amount of impact strength required for the composition. In general, the level of component (d) is in the range of about 1% by weight to about 30% by weight, based on the weight of the entire composition. In more preferred embodiments, the level ranges from about 5% by weight to about 15% by weight.

Compositions of this invention often also include effective amounts of at least one additive selected from the group consisting of flame retardants, drip retardants, dyes, pigments, colorants, lubricants, reinforcing agents, fillers, antistatic agents, heat stabilizers, ultraviolet light stabilizers, and plasticizers. These additives are known in the art, as are their effective levels and method of incorporation. Effective amounts for these additives vary widely, but they are usually present in an amount of from about 1% to 50% by weight, based on the weight of the entire composition.

Special mention is made of glass reinforcement, which is an important component for some embodiments of this invention. The glass can be used in any available form; with filamentous and chopped glass fibers being most common. The glass is usually present at a level of about 1% by weight to about 50% by weight, based on the weight of the entire composition. In some preferred embodiments, the level of glass is in the range of about 5% by weight to about 45% by weight; and in especially preferred levels, is in the range of about 10% by weight to about 30% by weight.

In general, compositions of this invention can be prepared by melt-blending the various ingredients. Mixing times and temperatures can be determined according to the particular materials used. The temperature is usually in the range of about 270°C to 350°C. A prolonged time and/or shear rate is desirable for mixing, with the proviso that substantial degradation of the resins be avoided.

Any of the melt-blending methods which can accommodate molten viscous masses may be employed. Batch or continuous systems may be used. Specifically, extruders, Banbury mixers, rollers, kneaders, and the like are usually suitable.

All of the ingredients can usually be added initially to the processing system, or else certain additives may be precompounded with each other or with either of the primary polymer components, PPE and polyamide. It appears that certain physical properties, such as impact strength and elongation, are sometimes enhanced by initially precompounding the PPE with the compatibilizing agent prior to blending with the polyamide.

While separate extruders may be used in processing, these compositions may also be prepared by using a single extruder having multiple feed ports along its length to accommodate the addition of various components.

Those of ordinary skill in the polymer processing art will be able to adjust blending times and temperatures, as well as component addition, without undue experimentation.

It should also be clear that improved molded articles prepared from the compositions described above represent an additional embodiment of this invention. As used herein, "molded articles" includes those prepared by any molding or extrusion technique.

The following examples are provided to illustrate some embodiments of the present invention. They are not intended to limit the invention in any aspect. All parts and percentages are by weight, unless otherwise indicated.

### EXAMPLES

The following components were used in this example. All parts and percentages are based on weight, unless otherwise noted:
Polyphenylene ether (PPE): A poly(2,6-dimethyl-1,4-phenylene) ether resin having a number average molecular weight of about 16,000, and an intrinsic viscosity in chloroform at 25°C of about 0.46 dl/g.
Polyamide 6,6: A commercial nylon material.
Polycarboxylic Acid Compatibilizer: Citric acid monohydrate.
Block copolymers:
   KRATON® D-1102: An unsaturated styrene-butadiene-styrene block copolymer, available from Shell Chemical Company.
   KRATON® G-1702: A substantially saturated styrene-(ethylene-propylene) block copolymer, also available from Shell Chemical Company.
EPDM Ethylene-propylene-diene materials having ethylene/propylene ratios of about 75/25, and containing about 2-7% diene monomer units. The materials used were either VISTALON 3708, available from Exxon Chemical Company, or ROYALENE IM 7100 or 7200, available from Uniroyal Chemical Company.

The compositions also contained minor amounts of stabilizers.

### Example 1

In this example, which describes comparative compositions outside the scope of the present invention, the following constituents were combined by melt-blending to form a base composition:

| Component | Amount (pbw) |
|---|---|
| PPE | 49 |
| Polyamide 6,6 | 41 |
| Citric Acid Monohydrate | 0.7 |

As shown in Table I, the samples also contained 10 pbw of either Kraton D-1102 or Kraton G-1702.

The blends were then fed into a 30 mm Werner and PfIeiderer twin screw extruder. The extruder melt temperature was about 600°F. The residence time was about 45 seconds.

The extrudate was cool-water quenched and then pelletized. The compositions were then molded into test specimens on a conventional molder. Multiple samples were used.

The following tests were performed:
HDT: Heat Distortion Temperature, under an applied pressure of 66 psi, using ASTM D648.
Impact Strength: (1) Izod test, notched specimen, in foot-pounds per inch, taken at room temperature and at -20°F, according to ASTM D256. inch, taken at room temperature and at -20°F, according to ASTM D256.

(2) Dynatup test, foot-lbs total energy, at room temperature and at -20°F, according to ASTM D3763.

The following results were obtained:

**Table 1**

| Impact Modifier(s) Utilized* | | | | | | | |
|---|---|---|---|---|---|---|---|
| Physical Properties | KG1702 | KG1702 | KD1102 | KD1102 | KG1702 | KG1702 | KD1102 |
| HDT (°C) | 200 | 199 | 194 | 192 | 199 | - | - |
| Izod (ft.lb/in) | 11.0 | 9.6 | 5.5 | 5.0 | 9.7 | 11.0 | 5.6 |
| Izod (ft.lb/in, -20°F) | 3.5 | 3.2 | 3.1 | 2.6 | 1.9 | 3.5 | 3.0 |
| Dynatup** | 41 d | 43 d | 38 d/s | 42 d/s | 44 d | 40 d | 42 d/s |
| Dynatup (-20°F) | 44 | 44 | 38 | 33 | 42 | 37 | 34 |

| | | | | | | | |
|---|---|---|---|---|---|---|---|
| * i.e., 10 pbw impact modifier in addition to the base composition. | | | | | | | |
| ** "d" = ductile break; "d/s" = ductile deformation with split/crack of the test specimen. | | | | | | | |

The results in Table 1 demonstrate that the Izod impact strength of compositions containing the substantially saturated block copolymer (KG-1702) was superior to that of compositions containing the unsaturated copolymer (KD-1102). However, such an improvement required relatively large amounts of the styrene-containing saturated material, i.e., 100% of the impact modifier content of the polymer system.

### Example 2

The following samples were prepared in the same manner as those of Example 1. Samples 1 and 2 are comparative samples, containing, respectively, 10 pbw of KG 1702 as the single impact modifier and 10 pbw of an EPDM material as the single modifier. Samples 3 and 4 are based on the present invention, and contain (total of 10 pbw each) mixtures of KG 1702 and the EPDM.

The same tests were performed; and the results are found in Table 2:

**Table 2**

| Impact Modifier(s) Utilized | | | | |
|---|---|---|---|---|
| Physical Properties | 1^{a} | 2^{a} | 3 | 4 |
| | KG1702 | EPDM | EPDM + KG1702* | EPDM + KG1702** |
| HDT(°C) | 197 | 199 | 199 | 201 |
| Izod (ft.lb/in) | 9.0 | 3.6 | 8.3 | 9.1 |
| Izod (ft.lb/in, -20°F) | 3.4 | 2.2 | 3.3 | 3.5 |
| Dynatup* | 41 d | 38 b | 43 d | 41 d |
| Dynatup (-20°F) | 43 | 24 | 42 | 46 |

| | | | | |
|---|---|---|---|---|
| * EPDM/KG1702 ratio of 70:30 | | | | |
| ** EPDM/KG1702 ratio of 50:50 | | | | |
| (a) Comparative samples | | | | |

The data of Table 2 demonstrate a synergistic effect resulting from the combination of impact modifiers. The impact strength for samples 3 and 4 is considerably improved over that of comparative sample 2, which contained only EPDM as the impact modifier. Samples 3 and 4 also compared favorably with sample 1 in terms of Izod and Dynatup values, achieving approximately the same level of impact strength while utilizing no more than half of the substantially saturated block copolymer (KG-1702).

### Example 3

The samples were prepared as in Example 1, using a molding temperature of about 525°F (274°C). Samples 5 and 7 are comparative samples, containing 10 parts of the single impact modifier indicated in Table 3 per 90.7 parts of the base composition described previously. Sample 6 is based on the present invention, and contains 10 parts of the indicated combination of impact modifiers per 90.7 parts of the base composition. The results of impact strength tests are as follows:

**Table 3**

| Impact Modifier(s) Utilized | | | |
|---|---|---|---|
| Physical Properties | 5^{a} | 6 | 7^{a} |
| | KG1702 | EPDM + KG1702* | EPDM |
| Izod (ft.lb/in) | 9.0 | 8.3 | 3.6 |
| Izod (ft.lb/in, -20°F) | 3.4 | 3.3 | 2.2 |
| Dynatup** | 41 d | 43 d | 38 b |
| Dynatup (-20°F) | 43 b | 42 b | 24 b |

| | | | |
|---|---|---|---|
| (a) Comparative samples | | | |
| * EPDM/KG1702 ratio of 70:30 | | | |
| ** "d" = ductile break; "b" = brittle break | | | |

The data in Table 3 demonstrate much improved impact strength properties for sample 6 as compared to sample 7, which contains only EPDM as the impact modifier. Furthermore, impact strength for sample 6 is approximately equal to that of sample 5, which contains only the substantially saturated block copolymer as the impact modifier.

### Example 4

In this example, various combinations of EPDM and the substantially saturated block copolymer were utilized (samples 9-11), and compared to comparative sample 8, which contained only the unsaturated block copolymer as the impact modifier. A total of 10 parts impact modifier was used in each sample, per 90.7 parts of the base composition described in Example 1. The ratio of impact modifiers is provided in the heading of Table 4. The samples were prepared as described previously, with a molding temperature of about 525°F (274°C). The results are as follows:

**Table 4**

| Impact Modifier(s) Utilized | | | | |
|---|---|---|---|---|
| Physical Properties | 8^{a} | 9 | 10 | 11 |
| | 10 KD1102 | 7 EPDM + 3 KG1702 | 5 EPDM + 5 KG1702 | 3 EPDM + 7 KG1702 |
| Izod (ft.lb/in) | 5.4 | 8.3 | 9.1 | 9.1 |
| Izod (ft.lb/in, -20°F) | 3.1 | 3.3 | 3.4 | 3.5 |
| Dynatup* | 40 s | 43 d | 40 d | 49 d |
| Dynatup (-20°F) | 29 b | 42 b | 33 b | 40 b |

| | | | | |
|---|---|---|---|---|
| (a) Comparative sample | | | | |
| * "d" = ductile break; "b" = brittle break; "s" = split | | | | |

The data in Table 4 demonstrate that the impact modifier combination of this invention provides good impact characteristics over a range of EPDM/saturated block copolymer ratios. In particular, the room temperature-Izod impact values were superior to those for the prior art composition of sample 8.

### Example 5

In this example, the thermal stability of blends containing various impact modifiers is examined. The stability of a polymer system is often adversely affected by extended exposure to heat, e.g., long residence times within an injection molding machine. Decreased thermal stability can in turn lead to degradation of properties such as impact strength.

Thermal stability was evaluated by comparing the impact strength of parts molded with long or short processing cycles: 120 second or 30 second molding cycles, respectively, each at 570°F (299°C). The same base composition as that of Example 1 was used (PPE, Polyamide 6,6 and citric acid monohydrate), with impact modifier content shown in Table 5. The same impact tests were employed.

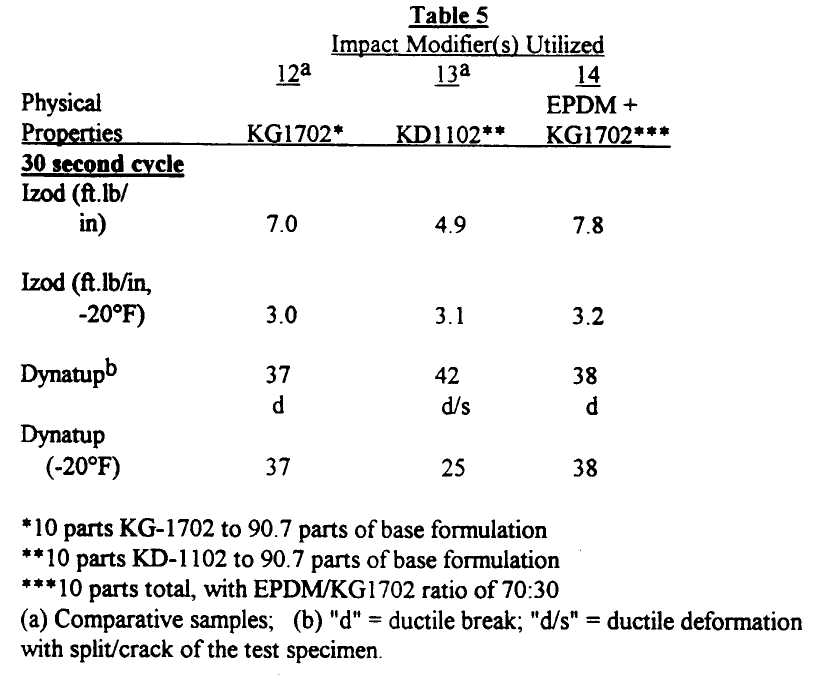

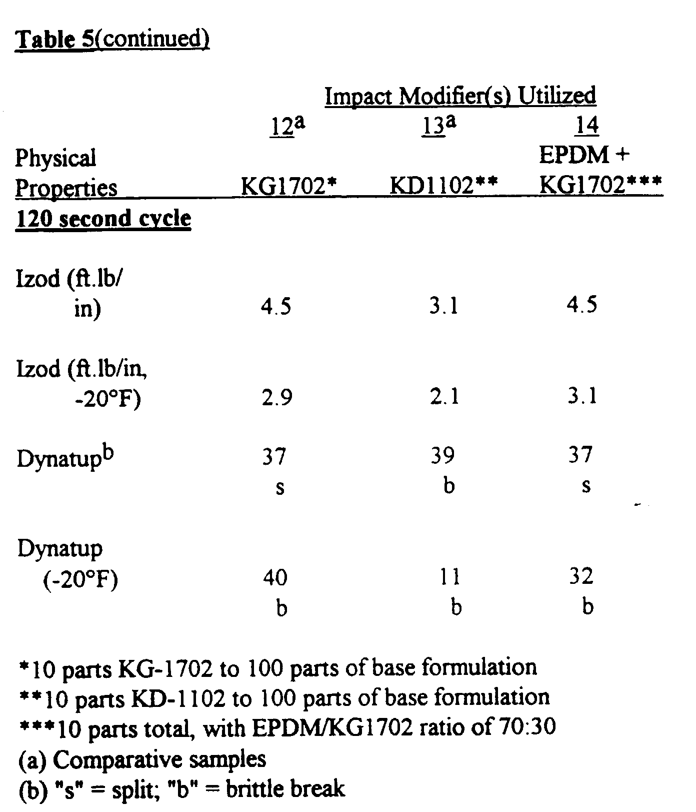

The data of Table 5 demonstrate that, after thermal exposure, PPE/polyamide compositions which contain the impact modifier combination of the present invention (sample 14) retain a higher impact strength than compositions which contain the unsaturated impact modifier (sample 13). This impact strength retention characteristic is similar to that exhibited by compositions which contain the substantially saturated block copolymer as the only impact modifier (sample 12).

All of the samples exhibited brittle behavior at -20°F.

### Example 6

The base composition for this example was as follows:
PPE - 21.5 pbw PPE functionalized with an acyl functional group-containing compound:
- 21.5 pbw
Polyamide 6,6: 45.0 pbw

Each sample also contained 12 pbw of one or more impact modifiers, as indicated in Table 6. Sample 15 is a comparative sample, while samples 16 and 17 are based on the present invention. The physical tests were performed as in the previous examples:

**Table 6**

| Impact Modifer(s) Utilized | | | |
|---|---|---|---|
| Physical Properties | 15^{a} | 16 | 17 |
| | KG1702* | EPDM + KG1702** | EPDM + KG1702*** |
| Izod (ft.lb/in) | 12.1 | 11.5 | 10.8 |
| Izod (ft.lb/in, -20°F) | 8.8 | 3.8 | 4.6 |
| Dynatup^{b} | 41.5 d | 44.0 d | 42.0 d |
| Dynatup^{b} (-20°F) | 42.0 d | 45.0 b | 42.0 b |

| | | | |
|---|---|---|---|
| *12 parts KG-1702 to 100 parts of base formulation | | | |
| **12 parts total, with EPDM/KG1702 ratio of 1:1 | | | |
| ***12 parts total, with EPDM/KG1702 ratio of 2:1 | | | |
| (a) Comparative sample | | | |
| (b) "d" = ductile at break; "b" = brittle break | | | |

The data of Table 6 show good room temperature-impact strength values for the present invention. While the low temperature impact characteristics for samples 16 and 17 are not as desirable as those of comparative sample 15, they are still acceptable for most end uses. Furthermore, samples 16 and 17 do not require as much of the substantially saturated block copolymer to achieve these impact characteristics, as discussed previously.

Many variations may suggest themselves to those skilled in the art from the above detailed description without departing from the scope or spirit of the invention. It is, therefore, to be understood that changes may be made in the particular embodiments of the invention as defined by the appended claims.

## Claims

1. A thermoplastic composition comprising:
(a) a polyphenylene ether resin;
(b) a polyamide;
(c) a compatibilizer for (a) and (b); and
(d) an impact strength modifying agent which is a combination of
(i) at least one substantially saturated block copolymer of the A-B type, where A is a polymerized vinyl aromatic monomer derived block, and B is derived from at least one polymerized conjugated diene or olefin; and
(ii) at least one unmodified interpolymer which itself comprises a mixture of mono-olefins

2. The composition of Claim 1, comprising:
(a) about 20 % by weight to about 80% by weight, based on the weight of the entire composition, of the polyphenylene ether resin;
(b) About 80% by weight to about 20% by weight, based on the weight of the entire composition, of the polyamide;
(c) About 0.05% to about 4% by weight, based on the weight of the entire composition, of the compatibilizing compound for components (a) and (b); and
(d) about 1% by weight to about 30% by weight, based on the weight of the entire composition, of the impact strength-modifying agent.

3. The composition of Claim 1, wherein the compatibilizing compound of component (c) is selected from the group consisting of:
(a) compounds which contain both (i) an ethylenic carbon-carbon double bond or a carbon-carbon triple bond and (ii) a carboxylic acid, acid anhydride, acid amide, imido, carboxylic ester, amino, or hydroxyl group;
(b) liquid diene polymers;
(c) epoxy compounds;
(d) polycarboxylic acids or derivatives thereof;
(e) an oxidized polyolefin wax;
(f) a compound containing an acyl functional group;
(g) a chloroepoxytriazine compound; and
(h) a trialkylamine salt of maleic acid or fumaric acid.

4. The composition of Claim 1, wherein the vinyl aromatic monomer derived block of component (d) is styrene.

5. The composition of Claim 1, wherein the polymerized conjugated diene of component (d) is derived from butadiene or isoprene.

6. The composition of Claim 1, wherein, for the A-B block copolymer of component (d), the molecular weight of the "A" unit is in the range of about 1,000 to about 100,000; and the molecular weight of the "B" unit is in the range of about 5,000 to about 500,000.

7. The composition of Claim 1, wherein the unmodified interpolymer of component (d)(ii) is prepared from ethylene and an alpha-olefin.

8. The composition of Claim 7, wherein the interpolymer is prepared from ethylene, an alpha-olefin, and a polyene.

9. The composition of Claim 8, wherein the interpolymer is an ethylene-propylene-diene material which comprises a mixture selected from the group consisting of:
(i) ethylene, propylene, and 5-ethylidene-2-norbornene;
(ii) ethylene, propylene, and 1,4-hexadiene; and
(iii) ethylene, propylene, and dicyclopentadiene.

10. The composition of Claim 1, further comprising effective amounts of at least one additive selected from the group consisting of flame retardants, drip retardants, dyes, pigments, colorants, lubricants, reinforcing agents, fillers, antistatic agents, heat stabilizers, ultraviolet light stabilizers, and plasticizers.
